# EUROPEAN PATENT SPECIFICATION

(11) **EP 4 372 517 B1**
(45) Date of publication and mention of the grant of the patent: **25.02.2026**
(21) Application number: 23209762.6
(22) Date of filing: 14.11.2023
(51) Int. Cl.: G05D 7/06, G05D 23/13

(54) **BINARY ARRAY FLOW CONTROL AND DIGITAL THERMOSTATIC CONTROL VALVE**
BINÄRES ARRAY ZUR DURCHFLUSSREGELUNG UND DIGITALES THERMOSTATISCHES REGELVENTIL
COMMANDE DE FLUX DE RÉSEAU BINAIRE ET VANNE DE COMMANDE THERMOSTATIQUE NUMÉRIQUE

(30) Priority: 16.11.2022 US 202263384023 P; 30.10.2023 US 202318497547
(43) Date of publication of application: 22.05.2024
(73) Proprietor: Kohler Mira Limited, Cheltenham, Gloucestershire GL52 5EP (GB)
(72) Inventor: PEEL, Kevin, Cheltenham, GL52 5EP (GB); KWACZ, Jason, Kohler, 53044 (GB)
(74) Representative: Barker Brettell LLP

(56) References cited:
- WO-A1-2010/034889
- DE-A1- 19 539 879
- US-A- 4 409 694
- US-A1- 2007 252 012
- US-A1- 2015 153 744

## Description

### Cross-Reference to Related Applications

The present application claims priority to U.S. Provisional Patent Application No. 63/384,023, filed November 16, 2022, and to U.S. Patent Application No. 18/497,547, filed October 30, 2023.

### Background

Flow control and temperature control are important components in the bathing industry. Current systems generally use motor-driven valves to control both the flow and the temperature of a water output. Such motors continuously utilize electrical power to maintain flow rates. DE19539879 describes a system using a number of electrically operated valves in a hot and cold water supply to a domestic outlet, such as in bathrooms. US2015/153744 describes fluid distribution systems, a controller for operating a fluid distribution system and a method of operation thereof. US2007/252012 describes a device for controlling a temperature of a fluid, including a plurality of valve assemblies, each coupled to a cold fluid supply, a hot fluid supply, and an outlet line. A controller is coupled to the hot and cold fluid supply temperature sensing elements and the plurality of valve assemblies. US4409694 describes an electronic control device for controlling the temperature of flowing liquid, for controlling the level of the liquid within a container and for maintaining the desired temperature within the container.

### Summary

Aspects of the present invention are set out in the appended claims, with dependent claims reciting optional features.

### Brief Description of Drawings

Fig. 1 is a flowchart illustrating an example of connections between each component of an example flow control system.
Fig. 2 is a perspective view of an example solenoid system.
Fig. 3 is an example of the solenoid system of Fig. 2 in operation.
Fig. 4 is a first table showing a first example of a seven-solenoid system.
Fig. 5 is a second table showing a second example of a six-solenoid system.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the scope of the present disclosure as defined by the appended claims

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

As stated above, current systems require the use of a significant amount of power, which ultimately renders the use of battery-powered systems impractical. To solve this problem, the present invention may be directed to a system with multiple solenoids, which may be bi-stable solenoid valves. These solenoids only use power when switching between binary values, and thus, use a significantly lower amount of power to operate. The solenoids may operate using a battery supply without depleting it in a manner which would render the use of a battery-power system inoperable.

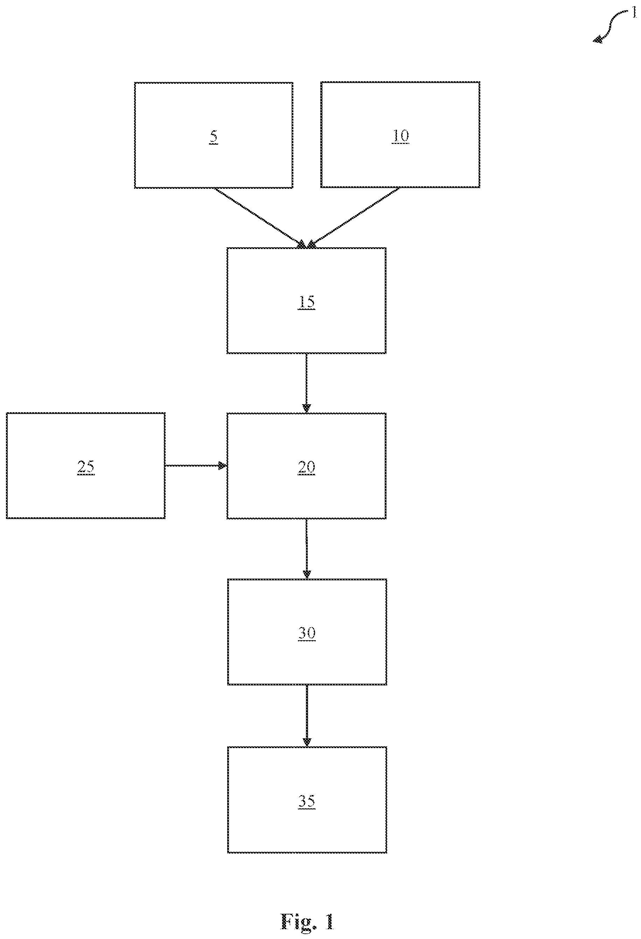

Turning first to Fig. 1, a flow control system 1 may include a hot water supply 5 and a cold water supply 10. The hot water supply 5 and cold water supply 10 may be directed into a flow regulator 15. The flow regulator 15 may be configured to output a consistent water pressure regardless of the pressure of the hot water supply 5 and cold water supply 10. The flow regulator 15 manages supply pressure variations by restoring a consistent flow of a water output. Separate flow regulators 15 may be used for each of the hot water supply 5 and the cold water supply 10, though only one flow regulator 15 is shown in Fig. 1 for ease of reference. In addition to or instead of the flow regulator 15, a pressure regulator may be used. If the pressure regulator is used instead of the flow regulator 15, the pressure regulator may optionally be placed either directly before the hot water supply 5 and cold water supply 10 or directly after the hot water supply 5 and cold water supply 10. As another alternative, a diaphragm valve may be used to regulate system pressure and/or flow.

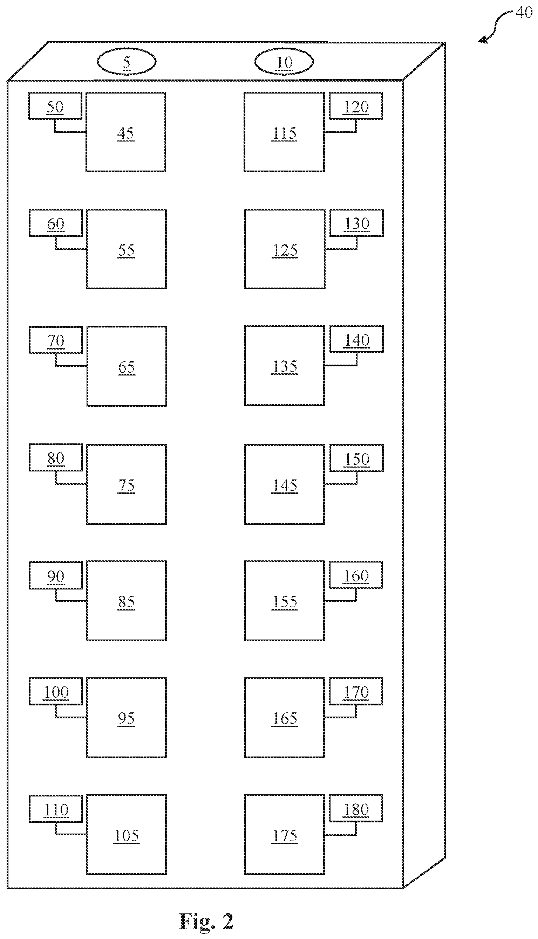

The regulated water supply from the one or more flow regulators 15 may be directed into an array of bistable solenoid valves 20 (hereinafter referred to merely as solenoids 20), which may be powered by a power supply 25 only when the state of the valve is changed from on to off or vice versa. If a battery is used as the power supply 25 rather than an external electrical power source, a Peltier device and/or water turbine generator may be used to power and/or recharge the battery during operation of the bi-stable solenoids (rather than ceasing operation in order to recharge the battery). A user selects or otherwise inputs a desired water temperature and flow rate. The solenoids 20 may adjust the hot water supply 5 and cold water supply 10 so that the resulting mixture has the user-selected desired water temperature at the user-selected desired flow rate, even when no controller is used. Moreover, Piezo electric switches may be used in addition to or in combination with hardwired controls to the solenoids. The solenoids 20 will be discussed further with reference to Figs. 2-5. The water supply may flow from the solenoids 20 through a temperature sensor 30. The temperature sensor 30 may determine the water mixture's temperature, to confirm when the water has reached the user's desired temperature.

When the user's desired water temperature has not been met, the temperature sensor 30 may send feedback to the solenoids 20 to adjust their settings in order to output the desired temperature. The temperature sensor 30 may be connected to a water outlet 35, which may be a faucet 35, a showerhead 35, or the like, where the user is supplied with the water. When the user's desired water temperature has not been met, the water may be recirculated to the flow regulator 15 or may flow directly out of the water outlet 35.

As illustrated in Fig. 2, a hot water supply 5 and cold water supply 10 may feed hot and cold water, respectively, to a solenoid system 40. The solenoid system 40 may be comprised of the array of solenoids 20 of Fig. 1. The solenoids 20 may be bistable solenoid valves; when a solenoid 20 is set to an "ON" position (binary value of 1), water will flow through; when a solenoid 20 is set to an "OFF" position (binary value of 0), water will not flow through. The solenoids 20 only consume power when switching between binary values. Rather than utilizing a constant power draw and draining a power supply quickly, the solenoids 20 only draw power when their state is changed.

In the example embodiment as shown in Fig. 2, seven solenoids (solenoids 45, 55, 65, 75, 85, 95, 105) are connected to the hot water supply 5, and seven solenoids (solenoids 115, 125, 135, 145, 155, 165, 175) are connected to the cold water supply 10. However, there may be any number of solenoids 20 in the solenoid system 40, and the use of seven solenoids 20 as an example in this disclosure shall not be construed as limiting. The solenoids 20 may each be connected to a power supply input (elements in increments of ten from 50 to 180). The power supply inputs 50, 60, 70, 80, 90, 100, 110, 120, 130, 140, 150, 160, 170, 180 may be connected to the power supply 25.

Each solenoid 20 may have a specified flow rate that is, nominally, double the flow rate of the previous solenoid 20. The flow rates of each solenoid may be as follows: solenoids 45 and 115, 0.1 liters per minute; solenoids 55 and 125, 0.2 liters per minute; solenoids 65 and 135, 0.4 liters per minute; solenoids 75 and 145, 0.8 liters per minute; solenoids 85 and 155, 1.6 liters per minute; solenoids 95 and 165, 3.2 liters per minute; solenoids 105 and 175, 6.4 liters per minute. In this example, a flow rate of 0.1 liters per minute was selected as the initial flow rate for solenoids 45 and 115, though other initial flow rates could be selected. For example, a flow rate of 0.2 liters per minute could be selected where finer resolution of temperature control is not useful or is difficult. Other flow rate resolutions (such as 0.3 or more) are also envisioned. The flow rates of each solenoid 20 can be used to adjust the flow rate and temperature of the water output. Although selecting flow rates for each solenoid valve in a doubling sequence is envisioned as the solution, each solenoid valve may be altered in order to be consistent with the target parameters of the system. Therefore, the solenoids 20 can be set to any flow rate.

The use of fourteen total solenoids 20 (seven for each of the hot water supply and cold water supply) at the flow rates discussed above allows for water flow to range from 0 liters per minute to 25.4 liters per minute in increments of 0.1 liters per minute. This value of 25.4 liters per minute is determined as follows: if all of the solenoids 20 for both the hot and cold water supplies are set to "ON," the hot and cold water supplies would each output water at a rate of 12.7 liters per minute; if each of the hot and cold water supplies are supplying water at a flow rate of 12.7 liters per minute, the output of the combined hot and cold water would be provided at a flow rate of 25.4 liters per minute. Additional solenoids 20 that each continue to double the flow rate of the previous solenoid 20 may be used for additional flow rate. Fewer solenoids 20 may be used when lower flow rates are appropriate. For example, solenoids 45 and 115 could be removed where less resolution of temperature control is appropriate, which would result in flow rate steps of 0.2 liters per minute.

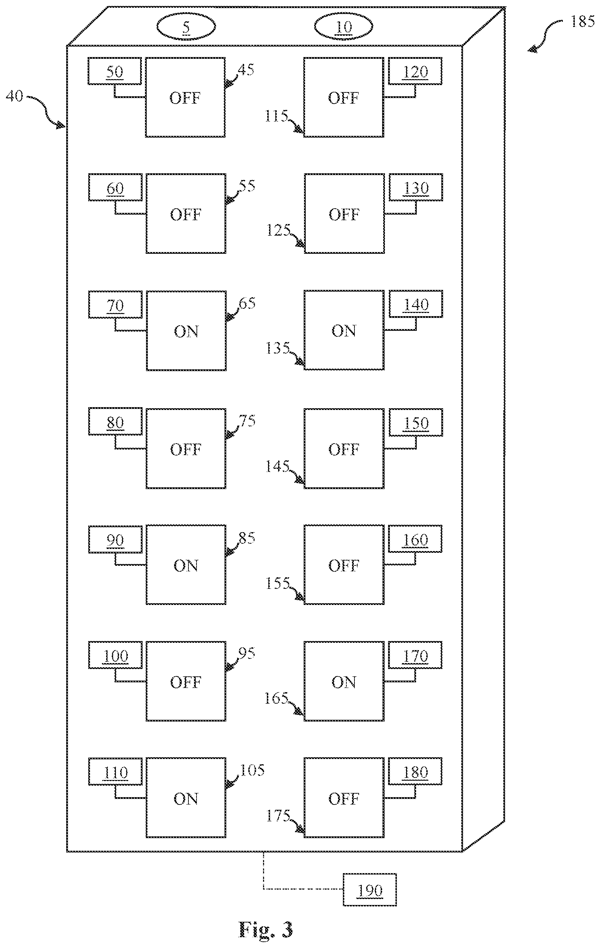

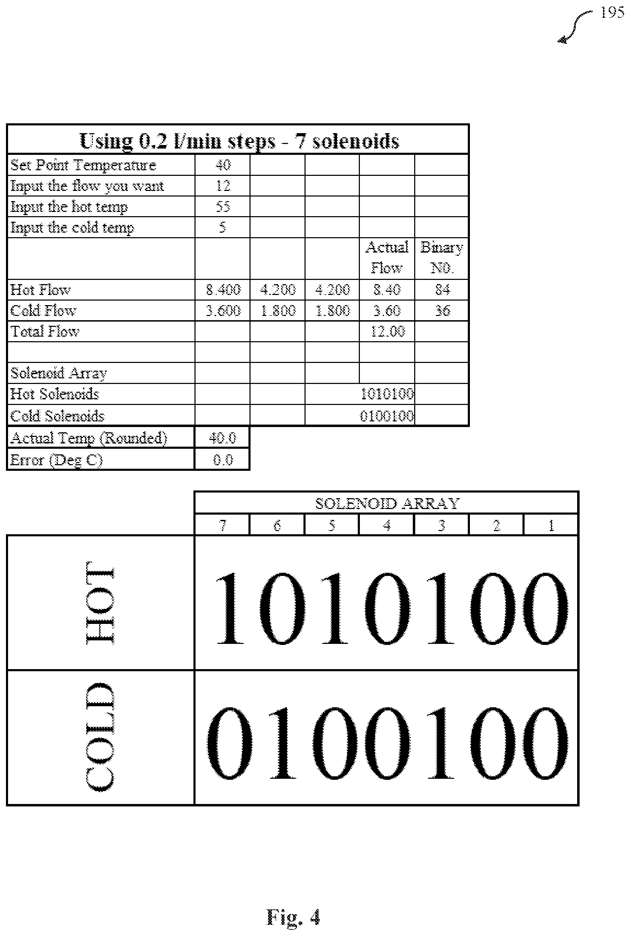

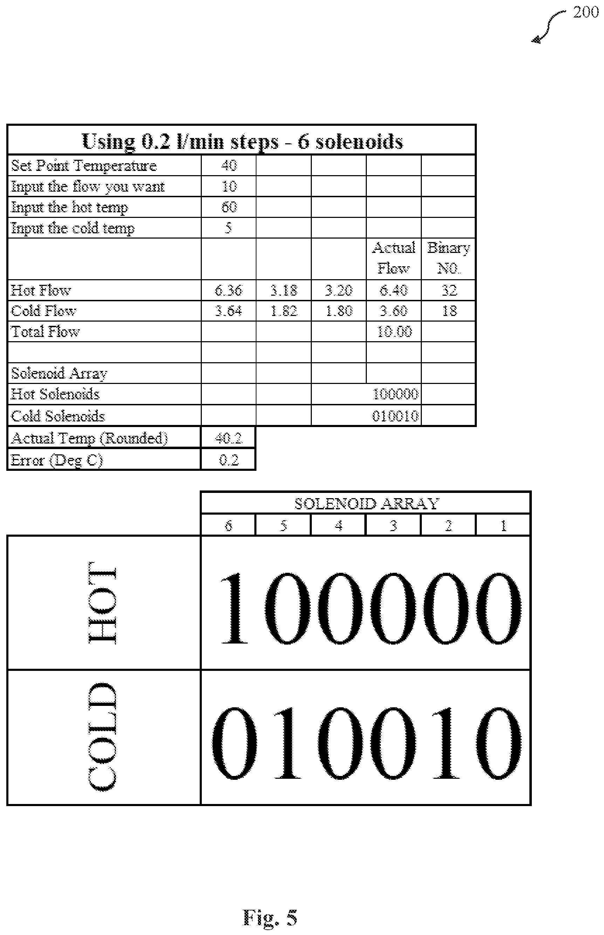

The solenoid system 40 may enact certain settings in operation, like those illustrated in example 185 of Fig. 3. A user may select an input 190, which may correspond to a desired water temperature. For example, the input 190 may be a desired water temperature of 40 degrees Celsius at a flow rate of 12 liters per minute. To achieve this, the solenoids 20 may be set to a particular configuration based on formulas which will be discussed further with reference to Figs. 4 and 5. In this example 185, the solenoids 20 for the hot water supply 5 are set in the following manner: solenoid 45, "OFF"; solenoid 55, "OFF"; solenoid 65, "ON"; solenoid 75, "OFF"; solenoid 85, "ON"; solenoid 95, "OFF"; solenoid 105, "ON." In this example 185, the solenoids 20 for the cold water supply 10 are set in the following manner: solenoid 115, "OFF"; solenoid 125, "OFF"; solenoid 135, "ON"; solenoid 145, "OFF"; solenoid 155, "OFF"; solenoid 165, "ON"; solenoid 175, "OFF."

The ON/OFF determinations of Fig. 3 may be determined given the input 190. The calculations set forth in table 195 of Fig. 4 may be used to determine the states of the solenoids. As illustrated, the user has selected the input 190, which may correspond to the set point temperature and desired flow rate noted above. Additionally, the temperature of the hot water supply and the cold water supply may be adjusted to account for the temperature of the supplies. For example, and as shown in Fig. 4, the user has selected a desired water temperature of 40 degrees Celsius and a desired flow rate of 12 liters per minute. The hot water supply is 55 degrees Celsius, and the cold water supply is 5 degrees Celsius.

The flow rate of the cold water supply is calculated as follows: the user's desired water temperature is subtracted from the hot water supply temperature; this is divided by the difference between the ratio of the hot water supply temperature and the desired flow rate, and the ratio of the cold water supply temperature and the desired flow rate. For a system in which the flow rate steps are 0.2 liters per minute as discussed above, this value is divided by two, rounded to the nearest tenth, and then doubled. This final series of steps is not standard in the art when calculating cold water flow rates, but rather results in a number that is a multiple of the 0.2 liters per minute increment, and therefore may not be utilized for a higher resolution flow rate system with steps of 0.1 liters per minute. Similar techniques could be used for resolutions of 0.3 liters or the like, where the number would be divided by 3, rounded, and then multiplied by three.

The flow rate of the hot water supply is calculated as follows. First, the desired flow rate, as selected by the user, is subtracted by the flow rate of the cold water supply, calculated above. Second, when using steps of 0.2 liters per minute as described above, this number is divided by two, rounded to the nearest tenth, and then doubled. This equals the flow rate of the hot water supply. As above, the steps of dividing by two, rounding to the nearest tenth, and multiplying by two account for solenoids that can output a flow rate in increments of 0.2, but may not be used with other flow rate increments, or may be modified with yet other flow rate increments.

To illustrate the calculations presented above, the following example is provided. The temperature of the hot water supply is 55 degrees Celsius, while the temperature of the cold water supply is 5 degrees Celsius. A user inputs a desired water temperature of 40 degrees Celsius and a desired flow rate of 12 liters per minute.

The binary sequence for the flow rate of the cold water supply is calculated as follows. First, 40 (the desired water temperature) is subtracted from 55 (the temperature of the hot water supply), which equals 15. Second, 15 is divided by the difference between the ratio of 55 (the temperature of the hot water supply) and 12 (the desired flow rate), and the ratio of 5 (the temperature of the cold water supply) and 12 (the desired flow rate), which equals 3.6. To determine the settings of the solenoids, a conversion to binary is completed by first multiplying 3.6 (the flow rate of the cold water supply) by 10 and then converting that number (36, in this example) to binary, which equals 0100100. As shown, when this binary sequence is translated to the solenoid array, the first binary number correlates to the seventh solenoid, and the seventh binary number correlates to the first solenoid, when the binary number is read left to right.

The binary sequence for the flow rate of the hot water supply is calculated as follows. The flow rate of the cold water supply (3.6) is subtracted from the desired flow rate (12), which equals 8.4. This final calculation of 8.4 equals the flow rate of the hot water supply in liters per minute. To determine the settings of the solenoids, a conversion to binary is completed by first multiplying 8.4 (the flow rate of the hot water supply) by 10 and then converting that number (84, in this example) to binary, which equals 1010100. When this binary sequence is translated to the solenoid array, the first binary number correlates to the seventh solenoid, and the seventh binary number correlates to the first solenoid.

These calculated flow rates of the hot and cold water supplies result in a water output at a temperature of 40 degrees Celsius and a flow rate of 12 liters per minute.

Rather than using seven solenoids as in Fig. 4, only six solenoids may be used, as illustrated in table 200 of Fig. 5. However, the calculations necessary to determine the binary sequence for the solenoid array are the same as described with reference to Fig. 4. Rather than the binary sequence having seven binary values, the binary sequence has six binary values. The missing solenoid 20 may be the first solenoids 45 and 115 with the 0.1 liter per minute flow rate. When six solenoids are used for each of the hot and cold water supplies, the highest flow rate output of the combined water is 25.2 liters per minute, with a flow rate resolution of 0.2 liters per minute. As such, additional steps are utilized when calculating the hot and cold flow rates. For example, the calculated value of 3.6 is then divided by 2 and rounded to the nearest tenth, which is 1.8. This 1.8 number is multiplied by 2, which equals 3.6. This final calculation of 3.6 equals the flow rate of the cold water supply in liters per minute. Similarly, for the hot water supply, the calculated 8.4 number is divided by 2 and then rounded to the nearest tenth, which equals 4.2. This 4.2 number is also multiplied by 2, which equals 8.4. This ensures both hot and cold flow rates are multiples of 0.2 liters per minute.

As with the seven-solenoid system, the 8.4 and 3.6 liter per minute numbers are converted to binary, in this case by multiplying each by 5, and the final binary numbers 101010 for hot and 010010 for cold are found. These binary numbers correlate to the on/off values for the six solenoids on each of the hot and cold water supplies 5 and 10.

The activation of the solenoid valves (to respond to changing conditions, such as temperature or flow rate) can generally be performed simultaneously or asynchronously. Some benefits of asynchronous activation of the solenoid valves include: prolonging system life; preventing water hammer; smoothing out change in flow rates; and smoothing out changes in temperature. According to an example which is out of scope of the present invention, if the changing condition dictates that solenoids 55, 75, and 95 should change their respective states to address the changing condition, the control system may change the state of solenoids 55, 75, and 95 instantaneously. According to the invention, the control system changes the state of solenoids in an asynchronous fashion, such as by changing the states of solenoids 55, 75, and 95 at different times in varying order by waiting an interval of time between each change. This asynchronous fashion of changing the states of the solenoids may prevent the system from using too much power at one time. For example, if each solenoid uses 300mA for 30 milliseconds to change the state of the solenoid, and if four solenoids are changed at once, then the system may use 1.2A during the 30 millisecond period. If the solenoids are changed in an asynchronous fashion, then the system may use 300mA across a span of 150 milliseconds, when each state change is spaced apart by 10 milliseconds.

In addition, other changing conditions can be addressed by temporarily adjusting a different solenoid. For example, if a change in state for solenoids 55, 75, and 95 is necessary to achieve the newly desired temperature and flow rate, the control system may change the state of solenoid 45 and then change the states of solenoids 55, 75, and 95 simultaneously, and then change the state of solenoid 45 to its pre-adjusted state. This method may be performed in permutation as needed to meet performance objectives of the system, as the changes in states of the solenoids can be done in any sequence.

A method is provided for adjusting a water supply of a water supply outlet, comprising: receiving a selected water temperature and water flow rate; calculating a hot-water flow rate and a cold-water flow rate that, upon mixing, results in the selected water temperature and water flow rate, based on a temperature of a hot-water supply and a cold-water supply; determining which solenoids, of a solenoid system attached to each of the hot-water supply and cold-water supply, to open in order to achieve the determined hot-water flow rate and cold-water flow rate; and opening the determined solenoids; wherein the solenoid system comprises: a plurality of bistable solenoid valves in a sequence, a first set of the plurality of bistable solenoid valves in fluid communication with the hot-water supply and a second set of the plurality of bistable solenoid valves in fluid communication with the cold-water supply, wherein each of the plurality of bistable solenoid valves has a respective flow rate.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale.

## Claims

1. A solenoid system (40) for binary array flow control comprising:
a water supply (5, 10), the water supply including at least one of a hot-water supply (5) and a cold-water supply (10); and
a plurality of bistable solenoid valves (20) arranged in a sequence and configured to be controlled by a control system, the plurality of bistable solenoid valves (20) being arranged in fluid communication with the water supply (5, 10), wherein each of the plurality of bistable solenoid valves (20) has a respective flow rate;
wherein each of the plurality of bistable solenoid valves (20) is configured to be controlled by the control system to open or close to adjust the water supply (5, 10) into a water supply outlet (35), and
**characterised in that** each of the plurality of bistable solenoid valves (20) is connected to at least one power supply (25) and the solenoid system (40) is configured to adjust the binary states of each of the plurality of bistable solenoid valves (20) asynchronously.

2. The solenoid system (40) of claim 1, wherein each successive solenoid valve (20) in the sequence is configured to allow double the flow rate of a previous solenoid valve (20) of the sequence.

3. The solenoid system (40) of claim 1 or claim 2, further comprising at least one of:
a flow regulator (15) positioned to regulate a pressure of the water supply outlet (35); and
a temperature sensor (30) positioned to determine a temperature of the water supply outlet (35); and
a diaphragm valve configured to regulate at least one of water pressure or flow rate.

4. The solenoid system (40) of claim 1 or claim 2 or claim 3, wherein: the at least one power supply (25) is configured to provide power only when at least one of the plurality of bistable solenoid valves (20) adjusts its binary state.

5. The solenoid system (40) of any one of the preceding claims, wherein the water supply outlet (35) is set to a first temperature and a first flow rate, and a binary state of each of the plurality of bistable solenoid valves (20) is adjusted to create the first temperature and the first flow rate in the water supply outlet (35), optionally wherein:
the first temperature equals a selected temperature selected by a user; and
the first flow rate equals a selected flow rate selected by the user.

6. A method for adjusting a water supply of a water supply outlet (35) comprising:
adjusting the solenoid system (40) according to any of claims 1 to 5 to regulate the flow rate and/or temperature of the water discharged through the water supply outlet (35), by controlling the state of one or more of the plurality of bistable solenoid valves (20) using a flow control system, wherein the method comprises adjusting the binary states of each of the plurality of bistable solenoid valves (20) asynchronously.

7. The method of claim 6, further comprising:
receiving a selected water temperature and water flow rate;
calculating a hot-water flow rate and a cold-water flow rate that, upon mixing, results in the selected water temperature and water flow rate, based on a temperature of a hot-water supply and a cold-water supply;
determining which bistable solenoids (20), of the solenoid system (40) attached to each of the hot-water supply (5) and cold-water supply (10), to open in order to achieve the determined hot-water flow rate and cold-water flow rate; and
opening the determined bistable solenoids (20);
wherein the plurality of bistable solenoid valves (20) of the solenoid system (40) comprises a first set of the plurality of bistable solenoid valves (45, 55, 65, 75, 85, 95, 105) arranged in fluid communication with the hot-water supply (5) and a second set of the plurality of bistable solenoid valves (115, 125, 135, 145, 155, 165, 175) arranged in fluid communication with the cold-water supply (10), wherein each of the plurality of bistable solenoid valves (20) has a respective flow rate.

8. The method of claim 7, wherein the step of determining which bistable solenoids (20) to open includes converting the calculated hot-water and cold-water flow rates to a binary number, wherein digits in the binary number correspond to the bistable solenoids (20).

## Patentansprüche

1. Magnetventilsystem (40) zur Durchflussregelung in binären Anordnungen, umfassend:
eine Wasserzufuhr (5, 10), wobei die Wasserzufuhr mindestens eines von einer Heißwasserzufuhr (5) und/oder einer Kaltwasserzufuhr (10) einschließt; und
eine Vielzahl von bistabilen Magnetventilen (20), die in einer Abfolge angeordnet und so konfiguriert ist, dass sie von einem Steuerungssystem gesteuert werden kann, wobei die Vielzahl von bistabilen Magnetventilen (20) in strömungstechnischer Kommunikation mit der Wasserzufuhr (5, 10) angeordnet ist, wobei jedes von der Vielzahl von bistabilen Magnetventilen (20) eine jeweilige Durchflussrate aufweist;
wobei jedes von der Vielzahl von bistabilen Magnetventilen (20) so konfiguriert ist, dass es vom Steuerungssystem gesteuert wird, um sich zu öffnen oder zu schließen, um die Wasserzufuhr (5, 10) in einen Wasserzufuhrauslass (35) einzustellen, und
**dadurch gekennzeichnet, dass** jedes von der Vielzahl von bistabilen Magnetventilen (20) an mindestens eine Stromzufuhr (25) angeschlossen ist und das Magnetventilsystem (40) so konfiguriert ist, dass es die binären Zustände jedes von der Vielzahl von bistabilen Magnetventilen (20) asynchron einstellt.

2. Magnetventilsystem (40) nach Anspruch 1, wobei jedes nachfolgende Magnetventil (20) in der Abfolge so konfiguriert ist, dass es den doppelten Durchfluss eines vorstehenden Magnetventils (20) in der Abfolge ermöglicht.

3. Magnetventilsystem (40) nach Anspruch 1 oder Anspruch 2, weiter umfassend mindestens eines von Folgendem:
einen Durchflussregler (15), der zum Regulieren eines Drucks des Wasserzufuhrauslasses (35) angeordnet ist; und
ein Temperatursensor (30), der zum Bestimmen einer Temperatur des Wasserzufuhrauslasses (35) angeordnet ist; und
ein Membranventil, das so konfiguriert ist, dass es mindestens eines von Wasserdruck oder Durchflussrate reguliert.

4. Magnetventilsystem (40) nach Anspruch 1 oder Anspruch 2 oder Anspruch 3, wobei die mindestens eine Stromzufuhr (25) so konfiguriert ist, dass sie nur dann Strom liefert, wenn mindestens eines von der Vielzahl von bistabilen Magnetventilen (20) seinen binären Zustand ändert.

5. Magnetventilsystem (40) nach einem der vorstehenden Ansprüche, wobei der Wasserzufuhrauslass (35) auf eine erste Temperatur und eine erste Durchflussrate eingestellt ist und ein binärer Zustand jedes von der Vielzahl von bistabilen Magnetventilen (20) so eingestellt ist, dass die erste Temperatur und die erste Durchflussrate im Wasserzufuhrauslass (35) erzeugt werden, wahlweise, wobei:
die erste Temperatur einer von einem Benutzer ausgewählten Temperatur entspricht und
die erste Durchflussrate einer vom Benutzer ausgewählten Durchflussrate entspricht.

6. Verfahren zum Regulieren einer Wasserzufuhr eines Wasserzufuhrauslasses (35), umfassend:
Einstellen des Magnetventilsystems (40) nach einem der Ansprüche 1 bis 5 zum Regulieren der Durchflussrate und/oder der Temperatur des durch den Wasserzufuhrauslass (35) abgegebenen Wassers, durch Steuern des Zustands eines oder mehrerer von der Vielzahl von bistabilen Magnetventilen (20) unter Verwendung eines Durchflussregelungssystems geregelt, wobei das Verfahren asynchrones Einstellen der binären Zustände jedes von der Vielzahl von bistabilen Magnetventilen (20) umfasst.

7. Verfahren nach Anspruch 6, weiter umfassend:
Empfangen einer ausgewählten Wassertemperatur und Wasserdurchflussrate;
Berechnen einer Heißwasserdurchflussrate und einer Kaltwasserdurchflussrate, die, nach dem Mischen, zu der gewünschten Wassertemperatur und Wasserdurchflussrate führen, basierend auf einer Temperatur einer Heißwasserzufuhr und einer Kaltwasserzufuhr;
Bestimmen, welche bistabilen Magnetventile (20) des Magnetventilsystems (40), die jeweils an die Heißwasserzufuhr (5) beziehungsweise die Kaltwasserzufuhr (10) angeschlossen sind, zu öffnen sind, um die bestimmte Heißwasserdurchflussrate und Kaltwasserdurchflussrate zu erreichen; und
Öffnen der bestimmten bistabilen Magnetventile (20);
wobei die Vielzahl von bistabilen Magnetventilen (20) des Magnetventilsystems (40) einen ersten Satz von der Vielzahl von bistabilen Magnetventilen (45, 55, 65, 75, 85, 95, 105), die in strömungstechnischer Kommunikation mit der Heißwasserzufuhr (5) angeordnet sind, und einen zweiten Satz von der Vielzahl von bistabilen Magnetventilen (115, 125, 135, 145, 155, 165, 175), die in strömungstechnischer Kommunikation mit der Kaltwasserzufuhr (10) angeordnet sind, umfasst, wobei jedes von der Vielzahl von bistabilen Magnetventilen (20) eine jeweilige Durchflussrate aufweist.

8. Verfahren nach Anspruch 7, wobei der Schritt des Bestimmens, welche bistabilen Magnetventile (20) zu öffnen sind, das Umwandeln der berechneten Heißwasser- und Kaltwasserdurchflussraten in eine Binärzahl einschließt, wobei die Ziffern in der Binärzahl den bistabilen Magnetventilen (20) entsprechen.

## Revendications

1. Système de solénoïdes (40) pour une commande d'écoulement de réseau binaire, comprenant :
une alimentation en eau (5, 10), l'alimentation en eau incluant au moins une alimentation en eau chaude (5) et une alimentation en eau froide (10) ; et
une pluralité de vannes solénoïdes bistables (20) agencées en une séquence et configurées pour être commandées par un système de commande, la pluralité de vannes solénoïdes bistables (20) étant agencées en communication fluidique avec l'alimentation en eau (5, 10), dans lequel chacune de la pluralité de vannes solénoïdes bistables (20) présente un débit d'écoulement respectif ;
dans lequel chacune de la pluralité de vannes solénoïdes bistables (20) est configurée pour être commandée par le système de commande afin de s'ouvrir ou de se fermer pour ajuster l'alimentation en eau (5, 10) vers une sortie d'alimentation en eau (35), et
**caractérisé en ce que** chacune de la pluralité de vannes solénoïdes bistables (20) est connectée à au moins une alimentation électrique (25) et le système de solénoïdes (40) est configuré pour ajuster de manière asynchrone les états binaires de chacune de la pluralité de vannes solénoïdes bistables (20).

2. Système de solénoïdes (40) selon la revendication 1, dans lequel chaque vanne solénoïde successive (20) de la séquence est configurée pour permettre le double du débit d'écoulement d'une vanne solénoïde précédente (20) de la séquence.

3. Système de solénoïdes (40) selon la revendication 1 ou la revendication 2, comprenant en outre au moins un parmi :
un régulateur d'écoulement (15) positionné pour réguler une pression de la sortie d'alimentation en eau (35) ; et
un capteur de température (30) positionné pour déterminer une température de la sortie d'alimentation en eau (35) ; et
une vanne à membrane configurée pour réguler au moins la pression ou le débit d'écoulement de l'eau.

4. Système de solénoïdes (40) selon la revendication 1 ou la revendication 2 ou la revendication 3, dans lequel : la au moins une alimentation électrique (25) est configurée pour fournir de l'énergie uniquement lorsqu'au moins une de la pluralité de vannes solénoïdes bistables (20) ajuste son état binaire.

5. Système de solénoïdes (40) selon l'une quelconque des revendications précédentes, dans lequel la sortie d'alimentation en eau (35) est réglée à une première température et un premier débit d'écoulement, et un état binaire de chacune de la pluralité de vannes solénoïdes bistables (20) est ajusté pour créer la première température et le premier débit d'écoulement dans la sortie d'alimentation en eau (35), facultativement dans lequel :
la première température correspond à une température sélectionnée qui est sélectionnée par un utilisateur ; et
le premier débit d'écoulement est égal à un débit d'écoulement sélectionné qui est sélectionné par l'utilisateur.

6. Procédé pour ajuster une alimentation en eau d'une sortie d'alimentation en eau (35), comprenant :
l'ajustement de système de solénoïdes (40) selon l'une quelconque des revendications 1 à 5 pour réguler le débit d'écoulement et/ou la température de l'eau rejetée via la sortie d'alimentation en eau (35), en commandant l'état d'une ou plusieurs de la pluralité de vannes solénoïdes bistables (20) à l'aide d'un système de commande d'écoulement, dans lequel le procédé comprend un ajustement asynchrone des états binaires de chacune de la pluralité de vannes solénoïdes bistables (20).

7. Procédé selon la revendication 6, comprenant en outre :
la réception d'une température d'eau et d'un débit d'écoulement d'eau sélectionnés ;
le calcul d'un débit d'écoulement d'eau chaude et d'un débit d'écoulement d'eau froide qui, une fois mélangés, donnent la température d'eau et le débit d'écoulement d'eau sélectionnés, sur la base d'une température d'une alimentation en eau chaude et d'une alimentation en eau froide ;
la détermination quelles vannes solénoïdes bistables (20), du système de solénoïdes (40) relié à chacune des alimentations en eau chaude (5) et en eau froide (10), doivent s'ouvrir afin d'atteindre le débit d'écoulement d'eau chaude et le débit d'écoulement d'eau froide déterminés ; et
l'ouverture des vannes solénoïdes bistables (20) déterminés ;
dans lequel la pluralité de vannes solénoïdes bistables (20) du système de solénoïdes (40) comprend un premier ensemble de la pluralité de vannes solénoïdes bistables (45, 55, 65, 75, 85, 95, 105) agencées en communication fluidique avec l'alimentation en eau chaude (5) et un second ensemble de la pluralité de vannes solénoïdes bistables (115, 125, 135, 145, 155, 165, 175) agencées en communication fluidique avec l'alimentation en eau froide (10), dans lequel chacune de la pluralité de vannes solénoïdes bistables (20) présente un débit d'écoulement respectif.

8. Procédé selon la revendication 7, dans lequel l'étape de détermination des vannes solénoïdes bistables (20) à ouvrir inclut une conversion des débits d'écoulement d'eau chaude et d'eau froide calculés en un nombre binaire, dans lequel les chiffres du nombre binaire correspondent aux vannes solénoïdes bistables (20).
